Europäisches Patentamt

(19) European Patent Office

Office européen des brevets

(11) EP 0 782 070 A1

(12) EUROPEAN PATENT APPLICATION

(43) Date of publication:
02.07.1997 Bulletin 1997/27

(51) Int. Cl.$^6$: G06F 7/72

(21) Application number: 96309270.5

(22) Date of filing: 19.12.1996

(84) Designated Contracting States:
DE FR GB IT NL

(30) Priority: 28.12.1995 KR 9561392
28.02.1996 KR 9605131

(71) Applicant: DAEWOO ELECTRONICS CO., LTD
Seoul (KR)

(72) Inventor: Im, Yong-Hee,
Video Research Center
Namdaemoon-Ro, Jung-Gu, Seoul (KR)

(74) Representative: Neobard, William John et al
Page White & Farrer
54 Doughty Street
London WC1N 2LS (GB)

(54) **Finite field inverter**

(57) A finite field inverter, which determines an inverse ($\alpha^{-1}$) of an element ($\alpha$) of a finite field GF($2^m$), comprises: a first multiplexor for selectively providing $\alpha$ or a first feedback value; a first multiplier for squaring $\alpha$ or the first feedback value provided from the first multiplexor; a first register for storing the output of the first multiplier and providing it to the first multiplexor as the first feedback value; a second multiplexor for selectively supplying the first feedback value provided from the first register or "1"; a second multiplier for multiplying "1" or the first feedback value provided from the second multiplexor with a second feedback value; and a second register for storing the output of the second multiplier and providing it to the second multiplier as the second feedback value.

*FIG.2*

EP 0 782 070 A1

**Description**

The present invention is related to an apparatus for calculating an inverse of an element in a finite field $GF(2^m)$; and, more particularly, to an apparatus for calculating the inverse by using a standard basis.

The finite field $GF(2^m)$ is a number system containing $2^m$ elements, m being a positive integer. Its attractiveness in practical applications stems from the fact that each element can be represented by m binary digits. Its practicability in an error-correcting code, e.g., Reed-Solomon code, makes the finite field $GF(2^m)$ amenable for computational purpose, as described in, e.g., S. Lin et al., "Error Control Coding: Fundamentals and Applications", Prentice-Hall, 1983, pp 15-48.

There are several methods for performing an inversion in the finite field $GF(2^m)$. The most common one is the one making use of a look-up table, equivalent to a $2^m$ by m ROM (Read Only Memory). This method may be fastest but require a largest number of most circuit gates. In many applications, it would be desirable to perform inversions of m-bit symbols serially in m clock cycles to reduce the circuit size.

As is well known, for any $\alpha$ in the finite field $GF(2^m)$, $\alpha^{2^m} = \alpha$ . Hence, the inverse of $\alpha$ may be obtained as follows:

$$\alpha^{-1} = \frac{1}{\alpha} = \frac{\alpha^{2^m-1}}{\alpha} = \alpha^{2^m-2} \qquad \text{Eq. (1)}$$

As $2^m-2$ can be decomposed into $2+2^2+2^3+...+2^{m-1}$, $\alpha^{-1}$ can be expressed as

$$\alpha^{-1} = \prod_{k=1}^{m-1} \alpha^{2^k} \qquad \text{Eq. (2)}$$

An iterative inversion algorithm for determining the inverse of $\alpha$ according to Eq. (2) is as follows:

step 1)   Let $B=CS(\alpha)$ and $C=1$, $k=0$
          (wherein CS denotes a squaring function)
step 2)   Let $D=B\times C$ and $k=k+1$
step 3)   If $k=m-1$, $\alpha^{-1}=D$ and stop.
          If $k<m-1$, let $B=CS(B)$ and $C=D$ and go back to step 2)

wherein B, C and D are variables used in implementing the algorithm and k is an iteration index. The contents of B, C and D for first to (M-1)st iterations are given in Table 1, wherein the first column thereof represents iteration indices, the first iteration includes the above steps 1) and 2), and each of the remaining iterations includes the above steps 3) and 2) which are performed in that order.

Table 1

| k | B | C | D |
|---|---|---|---|
| 1 | $\alpha^2$ | 1 | $\alpha^2$ |
| 2 | $\alpha^4$ | $\alpha^2$ | $\alpha^{4+2}$ |
| 3 | $\alpha^8$ | $\alpha^{4+2}$ | $\alpha^{8+4+2}$ |
| $\vdots$ | $\vdots$ | $\vdots$ | $\vdots$ |
| $m-1$ | $\alpha^{2^{m-1}}$ | $\alpha^{2^{m-2}+\cdots4+2}$ | $\alpha^{2^{m-1}+\cdots4+2}$ |

In accordance with the procedure explained above, $\alpha^{-1}$ is obtained in (m-1) iterations. One of the devices which may be employed in implementing the above method is suggested in Charles C. Wang, "VLSI Architectures for Computing Multiplications and Inverses in GF($2^m$)", IEEE Trans. on Computers, pp. 709-717, vol. c-34, No. 8, August 1985. In this article, a normal basis set

$$\{\ \alpha\ ,\ \ \alpha^2\ ,\ \ \alpha^{2^2}\ ,\ \ldots,\ \ \ \alpha^{2^{m-1}}\ \}$$

is used to represent elements in the finite field GF($2^m$) instead of a conventional standard basis set {1, $\alpha$, $\alpha^2$, $\alpha^3$, ..., $\alpha^{m-1}$ }. In Wang's device, squaring is realized by a cyclic shift operation using the characteristics of the normal basis.

Although the squaring function can be conveniently realized based on the normal basis, the standard basis is more frequently used in designing a decoder of an error correcting code. Therefore, there has existed a need to provide an apparatus capable of calculating an inverse in the finite field GF($2^m$) based on the standard basis.

It is, therefore, a primary object of the present invention to provide a finite field inverter which determines an inverse of a finite field element based on the standard basis.

In accordance with the present invention, there is provided an apparatus for determining an inverse of $\alpha$ in m iterations, to provide an inverse $\alpha^{-1}$ according to

$$\alpha^{-1} = \prod_{k=1}^{m-1} \alpha^{2^k},$$

wherein $\alpha$ is an element on a finite field GF($2^m$) and m is a positive integer, the apparatus comprising:

a first multiplexor for selectively providing $\alpha$ or a first feedback value;
a first multiplier for squaring $\alpha$ or the first feedback value provided from the first multiplier, to thereby provide a first output value;
a first register for storing the first multiplication value and providing the first multiplication value as the first feedback value to the first multiplexor;
a second multiplexor for selectively supplying the first feedback value provided from the first register or "1";

a second multiplier for multiplying "1" or the first feedback value provided from the second multiplexor with a second feedback value, to thereby provide a second output value; and

a second register for storing the second output value and providing the second output value as the second feedback value to the second multiplier.

The above and other objects and features of the present invention will become apparent from the following description of preferred embodiments given in conjunction with the accompanying drawings, in which:

Fig. 1 is a circuit diagram of a first embodiment of a finite field inverter in accordance with the present invention; and
Fig. 2 shows a circuit diagram of a second embodiment of a finite field inverter in accordance with the present invention.

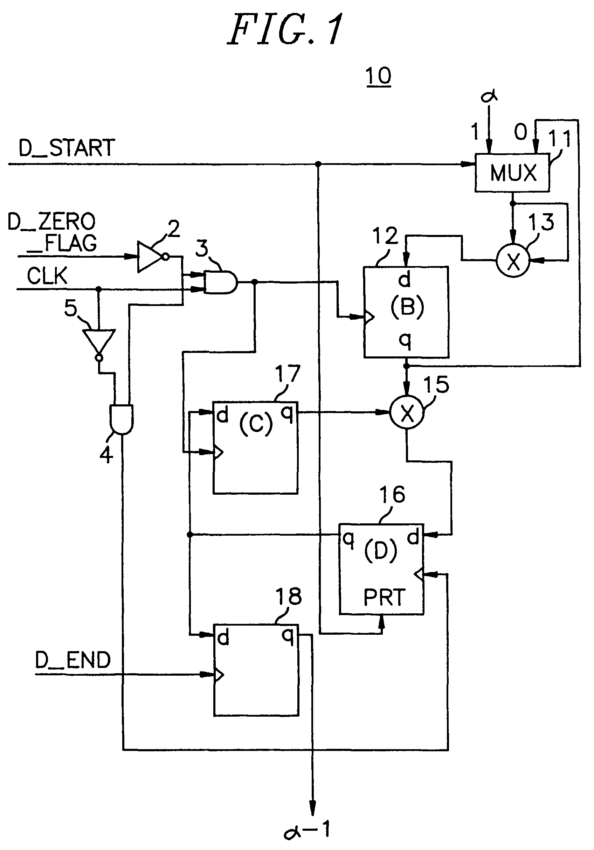

Referring to Fig. 1, there is shown a circuit diagram of a first embodiment of a finite field inverter in accordance with the present invention, which determines an inverse of an element $\alpha$ in the finite field GF($2^m$).
For the first embodiment, the conventional iterative inversion algorithm is modified as follows:

step 1A)     Let B=$\alpha$ , D=1, k=1
step 2A)     Let B=CS(B) , C=D ,
step 3A)     Let D=BxC
step 4A)     If k=m-1 , $\alpha^{-1}$ = D  and stop.
                 If k <m-1 , k=k+1  and go back to step 2A)

The inverter 10 shown in Fig. 1 includes four registers, each of which is a storage device for storing an m-bit element in the finite field GF($2^m$) having, e.g., m edge-triggered D flip-flops, each operating at a rising or a falling edge of a clock signal. Registers 12, 17 and 16 correspond to variables B, C and D which are used in the modified iterative inversion algorithm for the first embodiment, respectively, and will be referred to as B, C and D registers. A register 18 stores the inverse, $\alpha^{-1}$, obtained in the inverter 10, which is to be used in a decoding process for an error correcting code.

As shown in Fig. 1, $\alpha$ is inputted to an input port 1 of a multiplexor ("MUX") 11 in response to a control signal D_START provided externally, wherein D_START notifies an input of $\alpha$, i.e., the element in the finite field which is to be inverted.

In Fig. 1, a system clock represented as "CLK", whose one cycle corresponds to one iteration of the modified iterative inversion algorithm for the first embodiment, is used in operating the registers. Specifically, each of the D flip-flops included in the registers is operated in response to the rising or the falling edge of the system clock.

D_ZERO_FLAG is a control signal indicating whether $\alpha$ is "0" or not and is used in disabling the inverter 10 in case $\alpha$ is "0", since there is no inverse of "0" in the finite field. In this embodiment, D_ZERO_FLAG is assumed to be "1" when $\alpha$ equals "0". In that case, D_ZERO_FLAG disables the three registers 12, 16 and 17 by prohibiting the system clock from being fed to clock input ports of the registers. To achieve this, D_ZERO_FLAG is inverted at an inverter 2 and an inverted D_ZERO_FLAG is ANDed with CLK at an AND gate 3. A modified clock signal, which refers to the output of the AND gate 3, is fed to the clock input ports of the registers 12 and 17. In case D_ZERO_FLAG is "0", i.e., $\alpha$ is not 0, the modified clock signal is identical to CLK. Therefore, input values provided to d ports of the B and C registers 12 and 17 can be clocked into the corresponding registers at a rising edge of CLK.

Otherwise, that is, if D_ZERO_FLAG is "1", the output of the AND gate 3 is "0" irrespective of the value of CLK. Therefore, the input values to the d ports of the B and C registers 12 and 17 cannot be clocked thereto.

Similarly, an input to a clock port of the D register 16 is provided from an AND gate 4, wherein an output of the AND gate 4 is a logical AND of the inverted D_ZERO_FLAG and an inverted CLK. Therefore, an input value to a d port of the D register 16 is clocked thereto at a falling edge of CLK as long as $\alpha$ is not "0".

It should be noted that while contents of the B and C registers 12 and 17 are updated at a rising edge of CLK, contents of the D register 16 are updated at a falling edge of CLK. Therefore, the step 2A) of the modified iterative inversion algorithm is completed at each of the rising edges of CLK, while the step 3A) thereof is completed at each of the falling edges, so that the steps 2A) and 3A) included in a same iteration can be done sequentially in one system clock cycle.

The iterative inversion procedure for a nonzero element $\alpha$ will be described hereinafter.

First, an initialization procedure corresponding to the step 1A) is performed in response to D_START. That is, the MUX 11 provides the input element $\alpha$ to a multiplier 13 operating on the finite field GF($2^m$); and the D register 16 is preset to 1 in response to D_START provided to a PRT (preset) port thereof. In this instant, an input value to the d port of the D register 16 may be invalid since an output from a q port of the B register 12 is not yet decided and, therefore, the output of the multiplier 15 is not defined; and an input value to the d port of the C register 17 is 1 since the D register 16 is preset to 1.

Subsequently, $\alpha$ is squared at the multiplier 13 and $\alpha^2$ is fed to the d port of the B register 12. Then, at a rising edge of the first clock cycle, $\alpha^2$ provided from the multiplier 13 is clocked into the B register 12; and "1" provided from the q port of the D register 16 is clocked into the C register 17. These operations of updating the B and C registers 12 and 17 correspond to the step 2A).

From the rising edge until a falling edge of the first clock cycle, $\alpha^2$ provided from the B register 12 is fed to the multiplier 15, to be multiplied therein with "1" provided from a q port of the C register 17, and the result, i.e., $\alpha^2$ is provided to the d port of the D register 16. At the falling edge of the first clock cycle, $\alpha^2$ provided to the d port of the D register 16 is clocked threrto, to thereby render the input value to the d port of the C register 17 as $\alpha^2$. These operations of updating the D register 16 correspond to the step 3A), completing the first iteration.

The values provided from the q ports of the three registers after the initialization, and immediately after the rising and the falling edges of the first clock cycle are summarized in Table 2.

Table 2

|  | B | C | D |
|---|---|---|---|
| initialization | undefined | undefined | 1 |
| Rising edge | $\alpha^2$ | 1 | 1 |
| Falling edge | $\alpha^2$ | 1 | $\alpha^2$ |

Meanwhile, during the first clock cycle, $\alpha^2$ provided from the q port of the B register 12 is also provided through the MUX 11 back to the multiplier 13. At the multiplier 13, $\alpha^2$ is squared and the result, $\alpha^4$, is fed to the d port of the B register 12, to be clocked thereto at a rising edge of the second clock cycle.

In a similar manner as explained above, the three registers are updated in each of second to (m-1)st clock cycles.

In the first embodiment, the functions of the multiplier 13, the B register 12 and the C register 17 correspond to the step 2A); and the functions of the multiplier 15 and the D register 16 correspond to the step 3A).

The output values provided from the q ports of the three registers after the initialization, and immediately after the rising and the falling edges of the first to (m-1)st clock cycles are summarized in Table 3, wherein a first column representing the clock cycle and a first and a second rows for each clock cycle denote the output values after the rising edge and after the falling edge, respectively.

Table 3

| k | B | C | D |
|---|---|---|---|
| Initialization | undefined | undefined | 1 |
| 1 | $\alpha^2$ | 1 | 1 |
|   | $\alpha^2$ | 1 | $\alpha^2$ |
| 2 | $\alpha^4$ | $\alpha^2$ | $\alpha^2$ |
|   | $\alpha^4$ | $\alpha^2$ | $\alpha^{4+2}$ |
| 3 | $\alpha^8$ | $\alpha^{4+2}$ | $\alpha^{4+2}$ |
|   | $\alpha^8$ | $\alpha^{4+2}$ | $\alpha^{8+4+2}$ |
| ⋮ | ⋮ | ⋮ | ⋮ |
| m−1 | $\alpha^{2^{m-1}}$ | $\alpha^{2^{m-2}+\cdots4+2}$ | $\alpha^{2^{m-2}+\cdots4+2}$ |
|   | $\alpha^{2^{m-1}}$ | $\alpha^{2^{m-2}+\cdots4+2}$ | $\alpha^{2^{m-1}+\cdots4+2}$ |

The inverse, $\alpha^{-1}$, is provided from the q port of the D register 16 after a falling edge of the (m-1)st clock cycle. The inverse, $\alpha^{-1}$, is coupled to the register 18 and clocked therein in response to D_END, which refers to a signal denoting a completion of the inversion procedure and may be obtained by delaying D_START by a predetermined interval. The inverse, $\alpha^{-1}$, provided from a q port of the register 18 is provided to other parts of a decoder of the error correcting code.

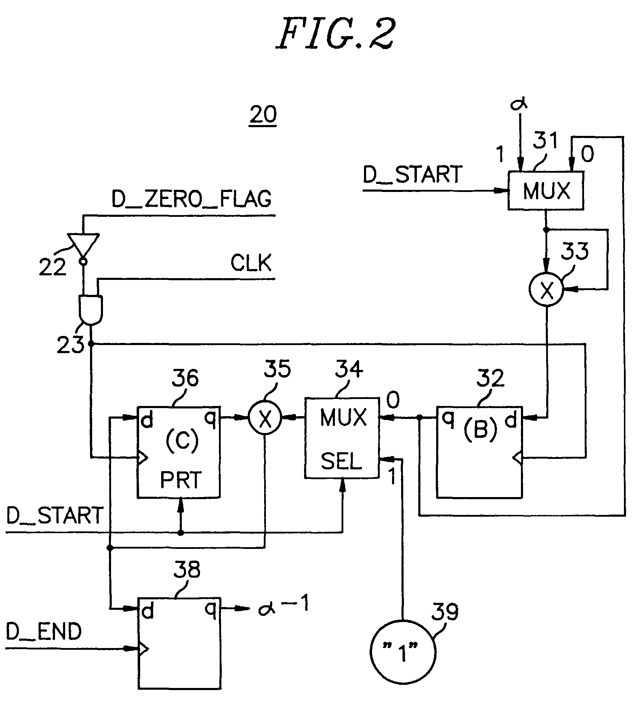

Referring to Fig. 2, there is shown a circuit diagram of a second embodiment of a finite field inverter in accordance with the present invention.

For the second embodiment, the iterative inversion algorithm is further modified as follows:

step 1B)    Let B=$\alpha$, C=1, k=1
step 2B)    if k=1 C=1xC , and if k>1 C=BxC
step 3B)    Let B=CS(B)
step 4B)    If k=m-1 , $\alpha^{-1}$ = C and stop.
            If k <m-1 , k=k+1 and go back to step 2B)

The modified iterative algorithm for the second embodiment uses two variables B and C. Accordingly, the inverter 20 shown in Fig. 2 includes three registers, wherein registers 32 and 36 correspond to the variables B and C, respectively, which are used in the modified iterative inversion algorithm for the second embodiment; and an output register 38 stores the inverse obtained in the inverter 20, to be used in a decoding process of the error correcting code. In the second embodiment, the functions of the multiplier 35 and the C register 36 correspond to the step 2B); and the functions of the multiplier 33 and the B register 32 correspond to the step 3B).

D_START, D_END and D_ZERO_FLAG shown in Fig. 2, are the same as those of the first embodiment shown in Fig. 1 and the functions thereof are also similar to those of the first embodiment. Similar to the first embodiment, a logical AND of CLK with the inverted D_ZERO_FLAG is coupled to clock ports of the registers 32 and 36 (which will be referred to as B and C register, respectively). Therefore, the B and C registers 32 and 36 function in case D_ZERO_FLAG is "0", i.e., the input element $\alpha$ is not 0.

Similar to the first embodiment, an initialization procedure is performed in response to D_START. Specifically, when D_START denotes a start of the inverting procedure, MUX 31 selects the input element $\alpha$ and provides it to two input ports of a multiplier 33; a MUX 34 selects "1" provided from a memory 39 and provides it to a multiplier 35; and the C register 36 is preset to 1.

Subsequently, the multiplier 35 multiplies "1" provided from the MUX 34 with "1" provided from the C register 36 and provides the result, i.e., "1" back to the d port of the C register 36. $\alpha$ is squared at the multiplier 33 and $\alpha^2$ is fed to the d port of the register 32.

Then, a first clock cycle follows. At a rising edge of the first clock cycle, $\alpha^2$ provided from the multiplier 33 is clocked into the B register 32; and "1" provided from the multiplier 35 is clocked into the C register 36.

During the first clock cycle following the rising edge, $\alpha^2$ provided from the q port of the B register 32 is fed to the MUX 34 and to the MUX 31. Except during the initialization, the MUX 31 and the MUX 34 select the output of the B register 32 provided to the 0 ports thereof and provides it to the multiplier 35 and to the multiplier 33.

At the multiplier 35, $\alpha^2$ provided from the B register 32 is multiplied with "1" provided from the q port of the C register 36, and the result, i.e., $\alpha^2$ is fed back to the d port of the C register 36, to be stored therein at a rising edge of a second clock cycle. At the multiplier 33, $\alpha^2$ is squared and the result, $\alpha^4$, is fed to the d port of the B register 32, to be stored therein at the rising edge of the second clock cycle. As described above, the first clock cycle or the first iteration is finished. The other clock cycles are similar to the above explained first clock cycle.

The contents of B and C registers 32 and 36 after the initialization and after the rising edge of each clock cycle are shown in Table 4.

The inverse, $\alpha^{-1}$, is provided from the q port of the C register 36 after a rising edge of a mth clock cycle, to the register 38 and clocked therein in response to D_END. The inverse provided from q port of the register 38 is supplied to other part of a decoder of the error correcting code.

As explained above, an inverse of an element in a finite field which is represented on the standard basis is obtained by using the inverters of the present invention.

While the present invention has been described with respect to the particular embodiments, it will be apparent to those skilled in the art that various changes and modifications may be made without departing from the scope of the invention as defined in the following claims.

## Table 4

| k | B | C |
|---|---|---|
| initialization | undefined | 1 |
| 1 | $\alpha^2$ | 1 |
| 2 | $\alpha^4$ | $\alpha^2$ |
| 3 | $\alpha^8$ | $\alpha^{4+2}$ |
| ⋮ | ⋮ | ⋮ |
| $m$ | $\alpha^{2^m}$ | $\alpha^{2^{m-1}+\cdots4+2}$ |

**Claims**

1. An apparatus for determining an inverse of $\alpha$ in (m-1) iterations, to provide an inverse $\alpha^{-1}$ according to

$$\alpha^{-1} = \prod_{k=1}^{m-1} \alpha^{2^k},$$

wherein said $\alpha$ is an element on a finite field $GF(2^m)$, m is a positive integer, and k is an integer ranging from 1 to (m-1), said apparatus comprising:

first selection means for selectively providing said $\alpha$ or a first feedback value;
means for squaring said $\alpha$ or the first feedback value provided from the first selection means, to thereby provide a first output value;
first memory means for storing the first output value and providing the first output value as the first feedback value to the first selection means;
second selection means for selectively supplying the first feedback value provided from the first memory means or "1";
means for multiplying "1" or the first feedback value provided from the second selection means with a second feedback value, to thereby provide a second output value; and
second memory means for storing the second output value and providing the second output value as the second feedback value to the multiplying means.

2. The apparatus of claim 1, wherein said $\alpha$ is represented as m-bit data based on a standard basis of the finite field $GF(2^m)$.

3. The apparatus of claim 2, wherein each of the first and second memory means includes edge triggered D flip-flops.

4. The apparatus of claim 3, wherein the first and the second output values provided to the first and second memory means, respectively, are stored therein in case said $\alpha$ has a value other than 0.

5. The apparatus of claim 1, further comprising third memory means for storing the second output value provided from the multiplication means and providing the second output value as the inverse.

6. The apparatus of claim 1, wherein the second memory means is initialized with "1".

7. The apparatus of claim 6, wherein the first selection means provides said $\alpha$ in a first iteration and provides the first feedback value in a (k1)th iteration, k1 being an integer ranging from 2 to (m-1).

8. The apparatus of claim 7, wherein the second selection means provides "1" in the first iteration and provides the first feedback value provided from the first memory means in the (k1)th iteration.

9. The apparatus of claim 1, wherein the first output value provided from the squaring means in a kth iteration, is

$$\alpha^{2^k}.$$

10. The apparatus of claim 9, wherein the second output value provided from the multiplication means in the kth iteration, is

$$\alpha^{2^1+2^2+\cdots+2^k}.$$

11. An apparatus for determining an inverse of $\alpha$ in m iterations, to provide an inverse $\alpha^{-1}$ according to

$$\alpha^{-1} = \prod_{k=1}^{m-1} \alpha^{2^k},$$

wherein said $\alpha$ is an element on a finite field $GF(2^m)$, m is a positive integer, and k is an integer ranging from 1 to m, said apparatus comprising:

first selection means for providing said $\alpha$ or a first feedback value;
first multiplication means for squaring said $\alpha$ or the first feedback value provided from the first selection means, to thereby provide a first output value;
first memory means for storing the first output value provided from the first multiplication means and providing the first output value to the first selection means as the first feedback value;
second memory means for storing a second feedback value and providing the second feedback value;
second multiplication means for multiplying the first feedback value provided from the first memory means with the second feedback value provided from the second memory means, to provide a second output value; and
third memory means for storing the second output value provided from the second multiplication means and providing the second output value to the second memory means as the second feedback value.

12. The apparatus of claim 11, wherein said $\alpha$ is represented as m-bit data based on a standard basis of the finite field $GF(2^m)$.

13. The apparatus of claim 12, wherein each of the first, second and third memory means includes edge triggered D flip-flops.

14. The apparatus of claim 13, wherein the first output value and the second feedback value provided to the first and second memory means, respectively, are stored therein in response to a rising edge of a system clock signal and the second output value provided to the third memory means is stored therein in response to a falling edge of the system clock signal.

15. The apparatus of claim 14, wherein the first output value, the second feedback value and the second output value provided to the first, the second and the third memory means, respectively, are stored therein in case said $\alpha$ is a value other than 0.

16. The apparatus of claim 11, further comprising fourth memory means for storing the second feedback value provided from the third memory means and providing the second feedback value as the inverse.

17. The apparatus of claim 11, wherein the second memory means is initilaized with "1".

18. The apparatus of claim 11, wherein the first selection means provides said $\alpha$ in a first iteration and provides the first feedback value in a (k1)th iteration, k1 being an integer ranging from 2 to m.

19. The apparatus of claim 11, wherein the first value provided from the first multiplication means in a kth iteration, is

$$\alpha^{2^k} .$$

20. The apparatus of claim 11, wherein the second value provided from the second multiplication means in the kth iteration, is

$$\alpha^{2^1+2^2+\cdots+2^{k-1}} .$$

# FIG.1

# FIG.2

European Patent Office

**EUROPEAN SEARCH REPORT**

Application Number

EP 96 30 9270

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | WO 95 12845 A (CIRRUS LOGIC) * page 2, line 34 - page 3, line 7; figure 1 * | 1-20 | G06F7/72 |
| A | * page 7, line 4 - line 5 * | 2,12 | |
| X | PATENT ABSTRACTS OF JAPAN vol. 11, no. 237 (E-528), 4 August 1987 & JP 62 048812 A (FUJITSU) * abstract * | 1-20 | |
| A | SHYUE-WIN WEI: "VLSI ARCHITECTURES FOR COMPUTING EXPONENTIATIONS, MULTIPLICATIVE INVERSES, AND DIVISIONS IN GF-(M)" 30 May 1994 , INTERNATIONAL SYMPOSIUM ON CIRCUITS AND SYSTEMS. (ISCAS) VLSI, LONDON, MAY 30 - JUNE 2, 1994, VOL. 4 OF 6, PAGE(S) 203 - 206 , INSTITUTE OF ELECTRICAL AND ELECTRONICS ENGINEERS XP000493176 * page 205, column 1, line 1 - line 38; figure 2 * | 1,11 | |
| | | | **TECHNICAL FIELDS SEARCHED (Int.Cl.6)** G06F |

The present search report has been drawn up for all claims

| Place of search | Date of completion of the search | Examiner |
|---|---|---|
| THE HAGUE | 7 April 1997 | Cohen, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)